# EUROPEAN PATENT APPLICATION

(11) **EP 2 058 365 A1**
(43) Date of publication of application: **13.05.2009**
(21) Application number: 07021783.1
(22) Date of filing: 09.11.2007
(51) Int. Cl.: C08L 1/02, C08L 97/02

(54) **Sawdust-reinforced pulp material and method of producing the same**

(71) Applicant: Park, Byung-Hoon, Juwong-dong, Jangan-gu Suwon-si Ch'ungch'ong namdo (KR); Elite Furniture Co., Ltd., Unsan-myeon Seosan-si Chungcheongnam-do (KR)
(72) Inventor: Park, Byung-Hoon, Suwon-si Gyeonggi-do (KR)
(74) Representative: Merkle, Gebhard

(57) **Abstract**

Disclosed herein is a sawdust-reinforced pulp material and its preparation method. Specifically, the present method comprises the steps of: mixing 70 to 85% by weight of a pulp prepared from waste paper with 15 to 30% by weight of sawdust, based on the total weight of the pulp and the sawdust, to prepare a mixture of pulp and sawdust; blending the mixture with an adhesive in the weight ratio of 1:1; pouring the mixture blended with the adhesive into a mold to form a pulp material; and drying the formed pulp material at ambient temperature of 20 to 25 °C in a state of nature to produce the sawdust-reinforced pulp material.

## Description

### BACKGROUND OF THE INVENTION

### Field of the Invention

The present invention relates to a reinforced pulp material and its preparation method. More specifically, the present invention relates to a sawdust-reinforced pulp material prepared from a mixture of pulp and sawdust or a mixture of pulp, sawdust and additive to increase the strength of material and moisture-proofing effect, and its preparation method.

### Background of the Related Art

Generally, a package for electronic products, an egg tray for bufferingly supporting eggs, a disposable and recyclable container for picnic boxes, etc. which are made of synthetic resin are not environmentally-friendly, and thus is now made of environmentally-friendly pulp.

A pulp mold is typically prepared in such a manner that, after being washed, a pulp is mixed with water to be dissolved, the mixture is stirred and is treated with chemicals, a resultant mixture is poured into a mold to form the pulp mold, and finally dried. In this case, in order to color the pulp mold, dye is added to a mixture of pulp and water.

However, a conventional pulp mold is susceptible to moisture and have a low strength. Thus, their applications are limited to a package material for light-weight products such as electronic products or egg trays. Further, there occurs a problem in that such pulp molds are disposable and thus wasted.

### BRIEF SUMMARY OF THE INVENTION

The present invention has been made in an effort to solve the above problems occurring in the prior art, and it is an object to provide a sawdust-reinforced pulp material prepared by using a mixture of pulp and sawdust or a mixture of pulp, sawdust and additive of charcoal, yellow ocher, glass fiber, ceramic and silver to thereby have a deodorizing effect and an antimicrobial activity, radiate far infrared, increase the strength of material and a moisture-proofing effect so that the lifespan of products is extended semi-permanently, and extend its application to the fields of sound-proofing material, roofing material, protective material for transporting which needs the strength of material, etc.

To accomplish the above object of the present invention, a method of producing a sawdust-reinforced pulp material comprises the steps of: mixing 70 to 85% by weight of a pulp prepared from waste paper with 15 to 30% by weight of sawdust, based on the total weight of the pulp and the sawdust, to prepare a mixture of pulp and sawdust; blending the mixture with an adhesive in the weight ratio of 1:1; pouring the mixture blended with the adhesive into a mold to form a pulp material; and drying the formed pulp material at ambient temperature of 20 to 25 °C in a state of nature to produce the sawdust-reinforced pulp material.

In the present method, the adhesive is a mixture of 80 to 90% by weight of water and 10 to 20% by weight of an environmentally-friendly adhesive of glue or bond.

In another embodiments, the present method of producing a sawdust-reinforced pulp material comprises the steps of: mixing 60 to 70% by weight of a pulp prepared from waste paper, 15 to 20% by weight of sawdust and 5 to 10% by weight of an additive, based on the total weight of the pulp, the sawdust and the additive, to prepare a mixture of the pulp, the sawdust and the additive; blending the mixture with an adhesive in the weight ratio of 1:1; pouring the mixture blended with the adhesive into a mold to form a reinforced pulp material; and drying the formed pulp material at ambient temperature of 20 to 25 °C in a state of nature to produce the sawdust-reinforced pulp material.

In the present method, the additive is a mixture of 30 to 50% by weight of charcoal powder, 20 to 25% by weight of yellow ocher powder, 15 to 20% by weight of glass fiber, 10 to 15% by weight of ceramic powder and 5 to 10% by weight of silver powder.

### BRIEF DESCRIPTION OF THE DRAWINGS

FIG. 1 illustrates the steps taken in carrying a first embodiment of producing a sawdust-reinforced pulp material according to the present invention.

FIG. 2 illustrates the steps taken in carrying a second embodiment of producing a sawdust-reinforced pulp material according to the present invention.

### <Explanation on reference numerals of the major parts of the drawings>

S110, S210: Preparing the mixture of pulp and sawdust

S120, S220: Blending the mixture with adhesive

S130, S230: Forming the pulp material

S140, S240: Drying the formed pulp material

### DETAILED DESCRIPTION OF THE PREFERRED EMBODIMENT

Hereinafter, the present invention will be illustrated in details with reference to the appended drawings.

Meanwhile, In case where it is judged that the detailed description about the relevant function or constitution commonly known in the art unnecessarily disturbs the understanding of the present invention, such a detailed description will not be included herein. The terms described below are defined in connection with the function in the present invention. The meaning of the terms can be changed according to the user, the intention of operator, usual practice, etc. Therefore, the terms should be defined based on the description over the specification.

### Embodiment 1

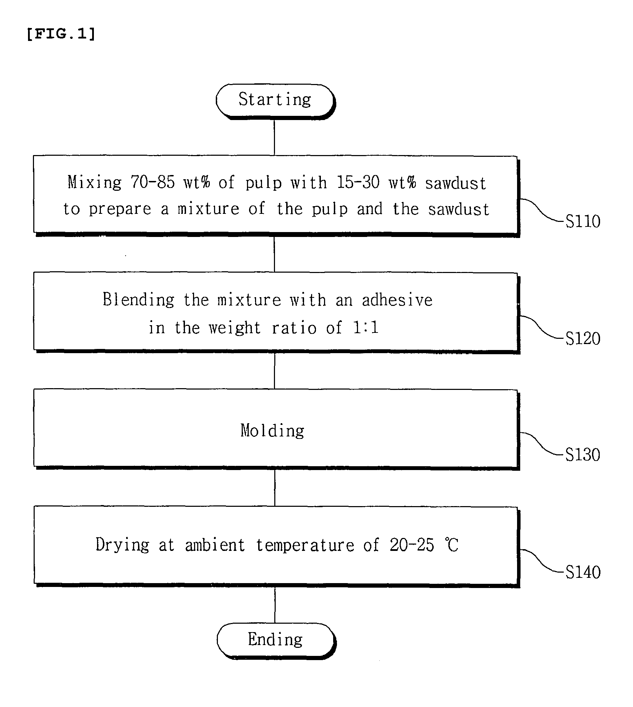

FIG. 1 is a flow chart illustrating the preparation process of the sawdust-reinforced pulp material according to the first embodiment.

With reference to FIG. 1, the present method of producing a sawdust-reinforced pulp material comprises the step (S110) of mixing 70 to 85% by weight of a pulp prepared from waste paper with 15 to 30% by weight of sawdust, based on the total weight of the pulp and the sawdust, to prepare a mixture of pulp and sawdust, the step (S120) of blending the mixture with an adhesive in the weight ratio of 1:1, the step (S130) pouring the mixture blended with the adhesive into a mold to form the reinforced pulp material, and the step (S140) of drying the formed, reinforced pulp material at ambient temperature of 20 to 25 °C to produce the dried reinforced pulp material, wherein the adhesive is a mixture of 80 to 90% by weight of water and 10 to 20% by weight of an environmentally-friendly adhesive of glue or bond.

Hereinafter, the process is illustrated in detail with reference to FIG. 1.

First, waste papers (newspaper, magazine, milk pack, etc.) are collected and, according to the conventional method, separated from foreign materials to remove them, bleached and then dried, thereby obtaining the pulp to be used in the following step.

Then, finely powdered sawdust is mixed with the pulp so that the pulp is reinforced, wherein the sawdust and pulp can be easily mixed because they are originated from the same source. Meanwhile, it is preferred that the powdered sawdust is treated by magnet and the like to remove foreign materials such as metal.

70 to 85% by weight of the pulp prepared above and 15 to 30% by weight of sawdust are mixed. To manufacture a soft product 85% by weight of pulp and 15% by weight of sawdust are mixed, and to manufacture a hard product 70% by weight of pulp and 30% by weight of sawdust are mixed, which increase the strength of material.

To the mixture of pulp and sawdust as prepared above is added an adhesive in the ratio of 1:1 of the mixture to the adhesive, wherein the adhesive is a mixture of 80 to 90% by weight of water with 10 to 20% by weight of an environmentally-friendly adhesive of glue or bond. For the adhesive, it is preferred that the mixing ratio of water and the environmentally-friendly adhesive of glue or bond is changed within the above range.

Upon completion of blending the mixture of the pulp and the sawdust with the adhesive, the blend is inserted to mold to form the reinforced pulp material and, subsequently, the molded and reinforced pulp material is dried in a state of nature (that is, without using any drier) at ambient temperature of 20 to 25 °C, resulting in producing the dried and reinforced pulp material. The process of drying can be also carried out with a drier.

### Embodiment 2

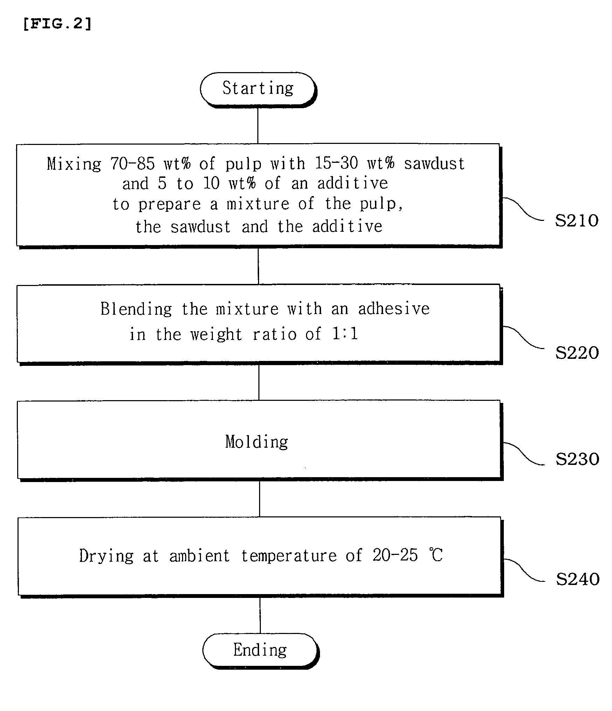

FIG. 2 is a flow chart illustrating the preparation process of the sawdust-mixed, reinforced pulp material according to the 2^{nd} embodiment.

With reference to FIG. 2, the present method of producing a sawdust-reinforced pulp material comprises the step (S210) of mixing 60 to 70% by weight of a pulp prepared from waste paper, 15 to 20% by weight of sawdust and 5 to 10% by weight of an additive, based on the total weight of the pulp, the sawdust and the additive, to prepare a mixture of the pulp, the sawdust and the additive, the step (S220) of blending the mixture with an adhesive in the weight ratio of 1:1, the step (S230) pouring the mixture blended with the adhesive into a mold to form a reinforced pulp material, and the step (S240) of drying the formed pulp material at ambient temperature of 20 to 25 °C to produce the dried reinforced pulp material, wherein the additive is a mixture of 30 to 50% by weight of charcoal powder, 20 to 25% by weight of yellow ocher powder, 15 to 20% by weight of glass fiber, 10 to 15% by weight of ceramic powder and 5 to 10% by weight of silver powder and the adhesive is a mixture of 80 to 90% by weight with 10 to 20% by weight of an environmentally-friendly adhesive of glue or bond.

Hereinafter, the process is illustrated in detail with reference to FIG. 2.

First, waste papers (newspaper, magazine, milk pack, etc.) are collected and, according to the conventional method, separated from foreign materials to remove them, bleached and then dried, thereby obtaining the pulp to be used in the following step.

Then, finely powdered sawdust is mixed with the pulp so that the pulp is reinforced, wherein the sawdust and pulp can be easily mixed because they are originated from the same source. Meanwhile, it is preferred that the powdered sawdust is treated by magnet and the like to remove foreign materials such as metal.

The additive is a mixture of 30 to 50% by weight of charcoal powder for deodorizing and cleaning, 20 to 25% by weight of yellow ocher powder for radiating far infrared, 15 to 20% by weight of glass fiber for reinforcing the strength of material and insulating sounds, 10 to 15% by weight of ceramic powder for radiating far infrared and 5 to 10% by weight of silver powder for antimicrobial effect. The mixing ratio of each component can be freely changed within the range of mixing according to the application field (for example, roofing material, floor material, soundproofing material, etc).

In case where the charcoal powder is mixed in the amount of less than 30% by weight and the yellow ocher is mixed in the amount of less than 20% by weight, the effects of them are reduced. In case where the charcoal powder is mixed in the amount of more than 50% by weight and the yellow ocher is mixed in the amount of more than 25% by weight, the weight of the reinforced pulp material becomes heavy.

It is preferred that the length and width of the glass fiber is 5 to 25 mm and 20 to 100 µm, respectively. When the glass fiber is mixed in the amount of less than 15% by weight, the strength of the reinforced pulp material is weak. When mixed in the amount of more than 20% by weight, the glass fiber is expelled from the mixture.

In case where the ceramic powder is mixed in the amount of less than 10% by weight, its effect is reduced. In case where the ceramic powder is mixed more in the amount of than 15% by weight, the color of the reinforced pulp material is changed and the weight of the material becomes heavy.

In case where the silver powder is mixed in the amount of less than 5% by weight, its effect is reduced. In case where the silver is mixed more than 10% by weight, the manufacturing cost is increased.

To manufacture a soft product, 70% by weight of pulp, 15% by weight of sawdust and 5% by weight of an additive are mixed. To manufacture a hard product, 60% by weight of pulp, 20% by weight of sawdust and 5% by weight of an additive are mixed, which increase the strength of material.

To the mixture of the pulp, the sawdust and the additive as prepared above is added an adhesive in the ratio of 1:1 of the mixture to the adhesive, wherein the adhesive is a mixture of 80 to 90% by weight of water with 10 to 20% by weight of an environmentally-friendly adhesive of glue or bond. For the adhesive, it is preferred that the mixing ratio of water and the environmentally-friendly adhesive of glue or bond is changed within the above range of mixing.

Upon completion of blending the mixture with the adhesive, the blend is poured into mold to form the reinforced pulp material and, subsequently, the molded and reinforced pulp material is dried in a state of nature at ambient temperature of 20 to 25 °C, resulting in producing the dried and reinforced pulp material. The process of drying can be also carried out with a drier.

Therefore, since the reinforced pulp material of the present invention is prepared by using a mixture of pulp and sawdust or a mixture of pulp, sawdust and additive of an mixture of charcoal, yellow ocher, glass fiber, ceramic and silver, the reinforced pulp material has a light weight, a high strength and a resistance to water to thereby become semi-permanent and, thus, can be used for diverse applications. Also, the reinforced pulp material has environmentally-friendly functions of antibiotics, deodorizing, far infrared-radiating and anion-releasing.

As shown above, the present invention provides many advantages which has a deodorizing effect, shows an antibiotic effect, radiates far infrared, increases the strength of material and improve a moisture-proofing effect, which extends the lifespan of the products prepared semi-permanently, and can broaden its application to the field of sound-proofing material, roofing material, protective material for transporting which needs the strength of material, etc.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method of producing a sawdust-reinforced pulp material, which comprises the steps of:
mixing 70 to 85% by weight of a pulp prepared from waste paper with 15 to 30% by weight of sawdust, based on the total weight of pulp and sawdust, to prepare a mixture of the pulp and the sawdust;
blending the mixture with an adhesive in the weight ratio of 1:1;
pouring the mixture blended with the adhesive into a mold to form a pulp material; and
drying the formed pulp material at ambient temperature of 20 to 25 °C in a state of nature to produce the sawdust-reinforced pulp material.

2. The method of claim 1, wherein the adhesive is a mixture of 80 to 90% by weight with 10 to 20% by weight of an environmentally-friendly adhesive of glue or bond.

3. A method of producing a sawdust-reinforced pulp material, which comprises the steps of:
mixing 60 to 70% by weight of a pulp prepared from waste paper, 15 to 20% by weight of sawdust and 5 to 10% by weight of an additive, based on the total weight of the pulp, the sawdust and the additive, to prepare a mixture of the pulp, the sawdust and the additive;
blending the mixture with an adhesive in the weight ratio of 1:1;
pouring the mixture blended with the adhesive into a mold to form a pulp material; and
drying the formed pulp material at ambient temperature of 20 to 25 °C in a state of nature to produce the sawdust-reinforced pulp material.

4. The method of claim 3, wherein the additive is a mixture of 30 to 50% by weight of charcoal powder, 20 to 25% by weight of yellow ocher powder, 15 to 20% by weight of glass fiber, 10 to 15% by weight of ceramic powder and 5 to 10% by weight of silver powder.

5. A sawdust-reinforced pulp material, prepared by the method of claim 1 or 3.
